(19) **Europäisches Patentamt**

**European Patent Office**

**Office européen des brevets**

(11) Veröffentlichungsnummer: **0 269 805 B1**

(12) # EUROPÄISCHE PATENTSCHRIFT

(45) Veröffentlichungstag der Patentschrift: **28.10.92**

(21) Anmeldenummer: **87114088.5**

(22) Anmeldetag: **26.09.87**

(51) Int. Cl.⁵: **G05D 16/20**

(54) **Elektrisch steuerbare Ventileinrichtung.**

(30) Priorität: **29.11.86 DE 3640838**

(43) Veröffentlichungstag der Anmeldung:
**08.06.88 Patentblatt 88/23**

(45) Bekanntmachung des Hinweises auf die
Patenterteilung:
**28.10.92 Patentblatt 92/44**

(84) Benannte Vertragsstaaten:
**AT CH DE ES FR GB IT LI SE**

(56) Entgegenhaltungen:
**EP-A- 0 005 294**
**FR-A- 2 295 551**

**ENERGIE FLUIDE, Band 24, Nr. 9, Dezember
1985, Seiten 4-6, Paris, FR; "Régulateurs de
pression électropneumatiques à commande
électronique intégrée"**

(73) Patentinhaber: **MANNESMANN REXROTH
PNEUMATIK GMBH
Bartweg 13, Postfach 91 12 70
W-3000 Hannover 91(DE)**

(72) Erfinder: **Geier, Georg
Martinihof 12
W-3000 Hannover 91(DE)**
Erfinder: **Göttling, Helmut, Dipl.-Ing.
Fuhrenkamp 3
W-3004 Isernhagen 4(DE)**
Erfinder: **Möller, Rudolf, Ing. (grad.)
Knülweg 15 c
W-3007 Gehrden 1(DE)**
Erfinder: **Scharnowski, Gerhard, Ing. (Grad.)
Im Vogelsang 12
W-3007 Gehrden 1(DE)**

(74) Vertreter: **Flaig, Siegfried
c/o Mannesmann AG Abteilung TP Postfach
5501
W-4000 Düsseldorf 1(DE)**

## Beschreibung

Die Erfindung betrifft eine elektrisch steuerbare Ventileinrichtung, insbesondere Druckregelventil, gemäß dem Oberbegriff des Patentanspruches 1.

Eine derartige elektrisch steuerbare Ventileinrichtung findet in Anlagen und Einrichtungen Verwendung, in denen in Abhängigkeit von einstellbaren elektrischen Größen unterschiedliche Drücke oder Mengen eines Mediums ausgesteuert werden sollen.

Von Nachteil ist bei einer solchen elektrisch steuerbaren Ventileinrichtung, daß sie nicht ohne besondere Maßnahmen in Räumen eingesetzt werden kann, in denen mit leicht entzündbaren Medien gearbeitet wird oder in Räumen, in denen sich ein leicht entzündbares Gasgemisch bilden kann, wie z.B. in Farbspritzkabinen. Es besteht nämlich die Gefahr, daß das leicht entzündbare Gasgemisch durch eventuelle Funkenbildung an oder in den elektrisch leitenden Mitteln gezündet wird.

Aus der EP 0 005 294 ist eine zünddurchschlagsichere Verbindung von Gehäuseteilen bekannt. Hierbei wird zur Herstellung einer Verbindung von Gehäuseteilen Kunstharz in Folienform verwendet, die zwischen den zu verbindenden Gehäuseteilen einzuspannen ist, wodurch anschließend das Kunstharz zum Aushärten gebracht wird. Damit ist zwar eine druckfeste Kapselung des darüber hergestellten Gerätes gegeben, die jedoch aufgrund einer materialfremden Verbindung der Gehäuseteile unter gewissen Betriebsbedingungen, wie z.B. Feuchtigkeit, Hitze usw. nicht dauerhaft genug ist, und somit eine Gefährdung beim Einsatz in einer entzündbaren Umgebung darstellt.

Desweiteren ist eine Kapselung von Ventileinrichtungen in solchen zünddurchschlagsicheren Gehäusen nur mit entsprechendem Aufwand möglich.

Der Erfindung liegt deshalb die Aufgabe zugrunde, eine Ventileinrichtung der eingangs erwähnten Art zu schaffen, die sich auch an Orten einsetzen läßt, an denen sich entzündbare Gasgemische bilden können oder an denen mit entzündbaren Medien gearbeitet wird.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Der Bauteile- und Herstellungsaufwand für die erfindungsgemäße Ventileinrichtung ist sehr gering.

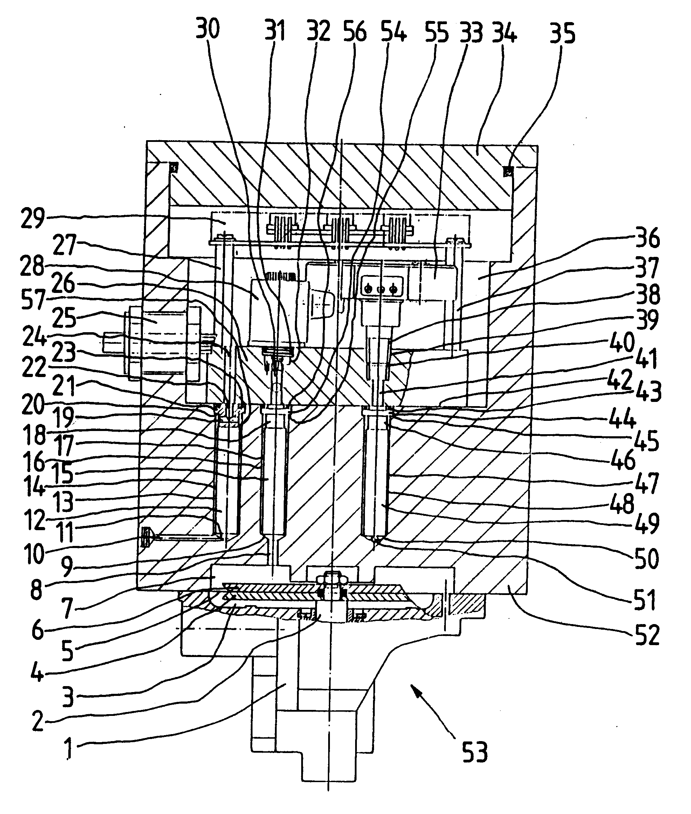

Anhand der Abbildung wird nachstehend ein Ausführungsbeispiel der Erfindung näher erläutert.

Die Abbildung zeigt eine als Druckregelventil ausgebildete elektrisch steuerbare Ventileinrichtung.

In einem von einem Deckel (34) verschlossenen Gehäuse (52) ist ein abgestuft ausgebildeter Innenraum (36) vorgesehen, in welchem eine Ventileinrichtung (28), ein Drucksensor (33) und eine elektrisch leitende Mittel bzw. elektrische Mittel zur Ansteuerung der Ventileinrichtung aufweisende Leiterplatte (29) angeordnet ist. Das Gehäuse (52) weist Anschlüsse für im Gehäuse (52) angeordnete Druckmittelleitungen auf.

Der Deckel (34) trägt einen in Umfangsrichtung verlaufenden Dichtring (35), der dichtend an der Innenwand des Gehäuses (52) anliegt.

Auf der dem Deckel (34) gegenüberliegenden Seite (42) des Innenraumes (36) ist im Gehäuse (52) einen Montage-und Verteilerplatte (26) befestigt. Die Montage- und Verteilerplatte (26) weist mehrere die Montage- und Verteilerplatte (26) durchringende Kanäle auf, von denen hier lediglich ein erster Kanal (41), ein zweiter Kanal (30) und ein dritter Kanal (24) dargestellt sind.

Der erste Kanal (41) weist auf seiner dem Deckel (34) zugewandten Seite einen in Richtung auf den Deckel (34) zu abgestuften sich konisch erweiternden Teil (39) auf. In den konisch ausgebildeten Teil (39) ist ein Druckmittelanschluß (38) eines im Innenraum (36) des Gehäuses (52) angeordneten Drucksensors (33) eingeführt. Der Druckmittelanschluß (38) trägt auf seinem Umfang einen Dichtring (40) welcher dichtend an der den konisch ausgebildeten Teil (39) begrenzenden Wandung des Kanals (41, 39) anliegt.

Der zweite Kanal (30) weist auf seiner dem Deckel (34) zugewandten Seite ebenfalls einen abgestuften Teil (32) auf, in welchem mittels eines Dichtringes (31) abgedichtet ein Druckmittelanschluß einer als 2/2-Wege-Magnetventil (28) ausgebildeten Ventileinrichtung angeordnet ist. Es ist noch eine weitere, als 2/2-Wege-Magnetventil ausgebildeter Ventileinrichtung vorgesehen, die in der Abbildung jedoch nicht dargestellt ist. Der Drucksensor (33) und die als elektrisch steuerbare Ventileinrichtung dienenden 2/2-Wege-Magnetventile (2/2-Wege-Magnetventile 28) sind über als elektrisch leitende Mittel dienende elektrische Leitungen mit elektrischen Mitteln zur Ansteuerung der Ventileinrichtung, die in diesem Ausführungsbeispiel unter anderem von einer mit elektrischen Bauteilen bestückten Leiterplatte (29) gebildet werden, verbunden. Durch eine in einer Wand des Gehäuses (52) druckdicht angeordnete Kabeldurchführung (25) sind hier nicht dargestellte elektrische Anschlußkabel, welche die Leiterplatte (29) mit einer von der Ventileinrichtung örtlich getrennten Einstelleinrichtung (Schalteinrichtung) verbinden, hindurchgeführt. Die Leiterplatte (29) wird mittels Bolzen (27, 37) an der Montage- und Verteilerplatte (26) gehalten.

Auf der dem Deckel (34) abgewandten Seite des Gehäuses (52) ist eine als Steuerkammer (7) dienende Kammer angeordnet, die von einem Steuerkolben (4, 5, 6) eines als von einem Druckmittel beaufschlagbare Einrichtung dienenden Relaisventil (53) begrenzt wird. Der Steuerkolben (4, 5, 6) setzt sich aus einer Membran (5) und zwei als Verstärkung dienenden Membrantellern (4) und (6) zusammen, wobei die Membran (5) zum Teil zwischen den beiden Membrantellern (4, 6) gelegen ist. An dem von den Membrantellern (4, 6) verstärkten Bereich der Membran (5) ist zentrisch ein als Betätigungsglied für das Relaisventil (53) dienender Ventilstößel (2) mit seinem einen Ende befestigt. Der Ventilstößel (2) steht mit nicht dargestellten Ventilgliedern für ein Einlaßventil und ein Auslaßventil des Relaisventils in Wirkverbindung.

Auf der der Steuerkammer (7) abgewandten Seite des Steuerkolbens (4, 5, 6) ist eine Arbeitskammer (3) des Relaisventils (53) angeordnet, welche einerseits vom Steuerkolben (4, 5, 6) und andererseits von einem Teil des am Gehäuse (52) befestigten Gehäuses (1) des Relaisventils (53) begrenzt wird.

Das Relaisventil (53) weist einen mit einer Druckmittelquelle verbundenen Druckmitteleingang, einen mit einen Verbraucher verbundenen Druckmittelausgang und einen zur Atmosphäre hin führenden Entlüftungsanschluß auf. Der Druckmitteleingang, der Druckmittelausgang und der Entlüftungsanschluß sind hier nicht dargestellt.

Die Steuerkammer (7) des Relaisventils (53) ist über eine erste Druckmittelleitung, die als eine im Gehäuse (52) der elektrisch steuerbaren Ventileinrichtung angeordneter Kanal (16) ausgebildet ist, sowie den in der Montage- und Verteilerplatte (26) angeordneten ersten Kanal (30) mit dem als Druckmittelausgang dienende Druckmittelanschluß des 2/2-Wege-Magnetventil (28) verbunden. Ein als Druckmitteleingang dienender Druckmittelanschluß des 2/2-Wege-Magnetventils (28) ist über einen als Druckmittelleitung dienenden im Gehäuse (52) angeordneten weiteren Kanal, der hier nicht dargestellt ist, mit einer Druckmittelquelle verbunden.

Das als Auslaßventil dienende zweite 2/2-Wege-Magnetventil, welches hier nicht dargestellt ist, ist mit einem ersten Druckmittelanschluß mit der Steuerkammer (7) des Relaisventils (53) und mit einem zweiten Druckmittelanschluß mit einer im Gehäuse (52) angeordneten als Kanal ausgebildeten Druckmittelleitung verbunden, die aus dem Gehäuse heraus zur Atmosphäre hin führt.

Eine dritte Druckmittelleitung, die ebenfalls als ein im Gehäuse (52) angeordneter Kanal (47) ausgebildet ist, verbindet den Druckmittelanschluß (38) des Drucksensors (33) mit der Arbeitskammer (3) des Relaisventils (53).

Eine als Beatmungsöffnung für den die elektrischen Bauteile (Leiterplatte 29) und die Ventileinrichtung (Magnetventile 28) beinhaltenden Innenraum (36) des Gehäuses (52) wird von einer im Gehäuse (52) angeordneten, als Kanal (13) ausgebildeten Druckmittelleitung sowie einer an diese anschließenden, die Montage- und Verteilerplatte (26) durchdringenden Bohrung (24) und einer in einer Wand des Gehäuses (52) angeordneten, an den Kanal (13) anschließenden Bohrung (10), die zur Atmosphäre hin führt, gebildet.

Jede der im Gehäuse (52) angeordneten, als Druckmittelleitung oder auch als Beatmungsöffnung dienenden kanalartigen Ausnehmungen (16, 47) und (13) weist einen in der kanalartigen Ausnehmung angeordneten sich über den überwiegenden Teil der axialen Erstreckung der jeweiligen kanalartigen Ausnehmung (16, 47, 13) erstreckenden Einsatz (15) bzw. (49) bzw. (12) auf. Der Querschnitt eines jeden dieser Einsätze (15) bzw. (49) bzw. (12) ist so bemessen, daß zwischen der die jeweilige kanalartige Ausnehmung (16) bzw. (47) bzw. (13) begrenzenden Wand und dem der jeweiligen kanalartigen Ausnehmung (16) bzw. (47) bzw. (13) zugeordneten Einsatz (15) bzw. (49) bzw. (12) wenigstens ein sich in Richtung der Längsachse der kanalartigen Ausnehmung (16, 47, 13) erstreckender und den Einsatz (15) umgebender Spalt (17) bzw. (48) bzw. (14) verbleibt, so daß auf dieser Art und Weise jede der im Gehäuse (52) angeordneten Druckmittelleitungen (16, 47, 13) als zünddurchschlagsicherer Spalt (17) bzw. (48) bzw. (14) ausgebildet ist.

Die zünddurchschlagsicheren Spalte (17, 48, 14) entsprechen bezüglich ihrer Länge und bezüglich ihres Querschnittes den nach DIN EN 50 018 festgelegten zünddurchschlagsicheren Spalten für Elektrogehäuse.

Jeder der Einsätze (12) bzw. (15) bzw. (49) weist an seinem der Montage- und Verteilerplatte (26) zugewandten Endbereich einen umlaufenden Vorsprung (21) bzw. (54) bzw. (44) auf, welcher mit seiner der Montage-und Verteilerplatte (26) abgewandten Seite an einer Abstufung (20) bzw. (55) bzw. (45) des zugehörigen Kanals (13) bzw. (16) bzw. (47) anliegt. Auf der der Montage- und Verteilerplatte (26) zugewandten Seite eines jeden Einsatzes (12, 15, 49) ist ein Dichtring (23, 56, 43) zwischen dem umlaufenden Vorsprung (21, 54, 44) und der Montage- und Verteilerplatte (26) angeordnet. Die Einsätze (12, 15, 49) sind durch die Montage- und Verteilerplatte (26) gegen Verschiebebewegung in axialer Richtung gesichert.

Jeder Einsatz (12, 15, 49) weist an seinem der Montage- und Verteilerplatte (26) zugewandten Endbereich eine Einschnürung (57, 18, 46) auf, die von einer quer zur Längsachse des Einsatzes (12) verlaufenden ersten Bohrung (19) durchdrungen wird. Eine in Richtung der Längsachse des Einsatzes (12) verlaufende zweite Bohrung (22), die an dem der Montage- und Verteilerplatte (26) zugewandten Ende des Einsatzes (12) beginnt, mündet in der ersten Bohrung (19). Über diese beiden Bohrungen (19, 22) des Einsatzes (12) sowie den daran anschließenden Kanal (24) in der Montage- und Verteilerplatte (26) ist der Innenraum (36) des Gehäuses (52) mit dem zünddurchschlagsicheren Spalt (14) (ringförmiger Kanal 14) ständig verbunden.

In der Zeichnung ist der Einfachheit halber nur der Einsatz (12) mit einer solchen Anordnung von Bohrungen dargestellt. Selbstverständlich weisen auch die beiden übrigen Einsätze (15) und (49) diese Bohrungsanordnung auf.
Auf der der Montage- und Verteilerplatte (26) abgewandten Seite sind die kanalartigen Ausnehmungen (13, 16) und (47), in denen die Einsätze (12, 15) und (49) angeordnet sind, mit einer sich konisch verjüngenden oder auch dachförmig ausgebildeten umlaufenden Abschrägung (11, 9) und (50) versehen, so daß die Einsätze (12, 15) und (49) spielfrei in den zugehörigen kanalartigen Ausnehmungen (13, 16) und (47) gehalten werden. Bei der an die Steuerkammer (7) des Relaisventils (53) mit dem Magnetventil (28) verbindenden kanalartigen Ausnehmung (16) schließt an den konisch ausgebildeten Teil (9) eine zylindrische Bohrung (8) an, die in der Steuerkammer (7) mündet. An den dachförmig ausgebildeten Teil (50) der kanalartigen Ausnehmung (47), welche mit dem Druckmittelanschluß (38) des Drucksensors (33) verbunden ist, schließt eine Bohrung (51) an, die zur Arbeitskammer (3) des Relaisventils hin führt.
Eine im Gehäuse (52) angeordnete Bohrung (10), die an ihrem aus dem Gehäuse (52) herausführenden Ende ein Filter aufweist, ist mit dem dachförmig ausgebildeten Teil (11) der als Beatmungsöffnung für den Innenraum (36) des Gehäuses (52) dienenden kanalartigen Ausnehmung (14) verbunden.

Wie auch aus der Abbildung ersichtlich ist, ist es möglich, nur einen Teil einer jeden Druckmittelleitung als zünddurchschlagsicheren Spalt auszubilden, wobei natürlich vorauszusetzen ist, daß dieser Teil der Druckmittelleitung so bemessen ist, daß er den Anforderungen nach DIN EN 50 018 für zünddurchschlagsichere Spalte entspricht.
Der zünddurchschlagsichere Spalt kann auf verschiedene Art und Weise ausgebildet sein.
Er kann, wie in der Abbildung dargestellt, die Form eines Ringspalts aufweisen oder es können auch durch einen in der kanalartigen Ausnehmung angeordneten Einsatz, der quer zur Längsachse einen z. B. sternförmigen Querschnitt aufweist, mehrere Spalte in einer als Teil einer Druckmittelleitung dienenden kanalartigen Ausnehmung gebildet werden.

Denkbar ist es natürlich auch, im Gehäuse mehrere einen geringeren Querschnitt aufweisende Bohrungen vorzusehen, welche in einer einen größeren Querschnitt aufweisenden Bohrung münden und die Funktion eines zünddurchschlagsicheren Spalts haben.

Die Erfindung bietet insbesondere den Vorteil, daß in den als kanalartige Ausnehmungen ausgebildeten Druckmittelleitungen, die bei üblichen Ventileinrichtungen bereits vorhanden sein können, lediglich die erwähnten Einsätze angeordnet werden müssen, die so ausgebildet sind, daß der ursprüngliche Querschnitt jeder der Ausnehmungen in einen oder mehrere, einen geringeren Querschnitt als jede der Ausnehmungen aufweisenden Spalt bzw. Spalte aufgeteilt wird.

Die vorstehend beschriebene elektrisch steuerbare Ventileinrichtung arbeitet wie folgt:
Von einer Druckmittelquelle wird der Ventileinrichtung (28) Druckmittel zugeführt. Gleichzeitig steht am Eingang des Relaisventils (53) Druckmittel an. Von einer hier nicht gezeigten Einstelleinrichtung wird über die Elektronik (Leiterplatte 29 mit elektrischen bzw. elektronischen Bauteilen) im Innenraum (36) des Gehäuses (52) an die als 2/2-Wege-Magnetventil ausgebildete Ventileinrichtung (28) eine Spannung angelegt. Das Magnetventil öffnet, so daß jetzt über die als zünddurchschlagsicherer Spalt ausgebildete Druckmittelleitung (15, 16, 17) als Steuerdruck dienendes Druckmittel in die Steuerkammer (7) des Relaisventils (53) gelangt. Der sich in der Steuerkammer (7) aufbauende Druck bewegt den Steuerkolben (4, 5, 6) mit dem Ventilstößel (2) nach oben in Richtung auf die Arbeitskammer (3) des Relaisventils (53) zu. Das Einlaßventil des Relaisventils (53) öffnet und von der Druckmittelquelle wird über das Relaisventil Druckmittel in einen Verbraucher eingesteuert.
Über die als zünddurchschlagsicherer Spalt ausgebildete Druckmittelleitung (49, 48, 47) gelangt Druckmittel aus der Arbeitskammer (3) des Relaisventils (53) zum Drucksensor (33).

Vom Drucksensor (33) wird auf die Elektronik (29) ein elektrisches Signal gegeben, welches abhängig ist von der Höhe des Druckes in der Arbeitskammer (3) des Relaisventils (53). Die Elektronik vergleicht das von der Einstelleinrichtung abgegebene, einen bestimmten Druck darstellende elektrische Signal mit dem vom Drucksensor (33) dem Druck in der Steuerkammer (3) des Relaisventils (53) entsprechenden Signal. Wird von der Elektronik (29) eine Übereinstimmung dieser beiden Signale festgestellt, so schließt die Ventileinrichtung (28).
Die auf den Steuerkolben (4, 5, 6) vom Druckmittel in der Arbeitskammer (3) und vom Steuerdruck in der Steuerkammer (7) erzeugten einander entgegengerichtet auf den Steuerkolben (4, 5, 6) einwirkenden Kräfte befinden sich jetzt im Gleichgewicht. Das Einlaßventil des Relaisventils (53) schließt.

Soll der vom Relaisventil (53) auszusteuernde Druck erhöht oder verringert werden, so wird durch Erhöhen des Druckes in der Steuerkammer (7) oder durch Veringern des Druckes in der Steuerkammer (7) des Relaisventils (53) auch der vom Relaisventil auszusteuernde Druck verändert.

Entsteht im Innenraum (36) des Gehäuses (52), z. B. durch einen Schaltvorgang, ein Funke, der im Innenraum (36) des Gehäuses (52) befindliches explosives Gasgemisch, welches durch die Beatmungsöffnung (10, 12, 13, 14, 24) in den Innenraum (36) eingedrungen sein kann, entzündet, so entsteht im Innenraum (36) des Gehäuses (52) eine Explosion.

Da die als Beatmungsöffnung dienende Druckmittelleitung jedoch als zünddurchschlagsicherer Spalt (12, 13, 14) ausgebildet ist, baut sich die Druckwelle im Innenraum (36) des Gehäuses über diesen zünddurchschlagsicheren Spalt (12, 13, 14) langsam zur Atmosphäre hin ab. Dabei reißt auch der Zündfunke ab, so daß sich die Explosion nicht in den Raum, in welchem sich die elektrisch steuerbare Ventileinrichtung befindet fortpflanzen kann.

Da sämtliche zum Innenraum (36) des Gehäuses (52) führenden Druckmittelleitungen als zünddurchschlagsichere Spalte ausgebildet sind, ist dieser Schutz auch dann gewährleistet, wenn z. B. eine der Druckmittelleitungen, wie z. B. die die Steuerkammer (7) mit der Ventileinrichtung (28) verbindende Druckmittelleitung undicht wird.

**Patentansprüche**

1.  Elektrisch steuerbare Ventileinrichtung, insbesondere Druckregelventil, mit folgenden Merkmalen:

    a) In einem Innenraum (36) eines Gehäuses (52) ist wenigstens eine elektrisch ansteuerbare Ventileinrichtung (28) angeordnet;

    b) Im Innenraum (36) desselben Gehäuses (52) sind elektrische Mittel bzw. elektrisch leitende Mittel (29) zur Ansteuerung der Ventileinrichtung (28) angeordnet;

    c) Das Gehäuse (52) weist Anschlüsse für im Gehäuse (52) angeordnete Druckmittelleitungen (16) auf, über welche die Ventileinrichtung einerseits mit einer Druckmittelquelle und andererseits mit einer mit Druckmittel beaufschlagbaren Einrichtung (53) verbindbar ist;

    **dadurch gekennzeichnet,**

    daß jede der Druckmittelleitungen (16) auf wenigstens einem Teil ihrer Länge als zünddurchschlagsicherer Spalt (17) derart ausgebildet ist, daß dieser aus einer im Gehäuse angeordneten kanalartigen Ausnehmung (16) und einem in dieser Ausnehmung (16) angeordneten, sich in Richtung der Längsachse der Ausnehmung (16) erstreckenden Einsatz (15) besteht, der so bemessen ist, daß zwischen dem Einsatz (15) und der die Ausnehmung (16) begrenzenden Wand wenigstens ein in Richtung der Längsachse der Ausnehmung (16) verlaufender und den Einsatz (15) umgebender Spalt (17) verbleibt.

2.  Elektrisch steuerbare Ventileinrichtung nach Anspruch 1 mit einer zur Beatmung des Innenraumes (36) des Gehäuses (52) dienenden, als kanalartige Ausnehmung (13) ausgebildeten Druckmittelleitung,

    **dadurch gekennzeichnet,**

    daß diese kanalartige Ausnehmung (13) ebenfalls auf wenigstens einem Teil ihrer Länge als zünddurchschlagsicherer Spalt (12, 13, 14) ausgebildet ist.

3.  Elektrisch steuerbare Ventileinrichtung nach Anspruch 1 oder 2,

    **dadurch gekennzeichnet,**

    daß der Einsatz (15) als zylindrischer Körper ausgebildet ist.

4.  Elektrisch steuerbare Ventileinrichtung nach Anspruch 3,

    **dadurch gekennzeichnet,**

    daß der Einsatz (15) quer zu seiner Längsachse einen sternförmigen Querschnitt aufweist.

5.  Elektrisch steuerbare Ventileinrichtung nach einem oder mehreren der vorhergehenden Ansprüche für ein elektrisch steuerbares Druckregelventil,

    gekennzeichnet durch die folgenden Merkmale:

    a) Im Innenraum (36) eines Gehäuses (52) sind eine Ventileinrichtung (28), ein Drucksensor (33) und eine Elektronik (29) angeordnet;

    b) Das Gehäuse (52) ist mit einem Relaisventil (53) verbunden, derart, daß ein Steuerkolben (4, 5, 6) des Relaisventils (53) eine im Gehäuse (52) angeordnete Steuerkammer (7) für das Relaisventil (53) begrenzt;

    c) Die Steuerkammer (7) ist über eine als zünddurchschlagsicherer Spalt (14, 15, 16) ausgebildete Druckmittelleitung mit der Ventileinrichtung (28) verbunden;

    d) Das Relaisventil (53) weist eine Arbeitskammer (3) auf, welche über eine als zünddurchschlagsicherer Spalt (49, 48, 47) ausgebildete Druckmittelleitung mit dem Druckmittelanschluß des Drucksensors (33) verbunden ist;

    e) Die Ventileinrichtung (28) und ein elektrisches Teil des Drucksensors (33) sind mit der Elektronik (29) verbunden;

f) Es ist eine mit der Elektronik (29) elektrisch verbundene Einstelleinrichtung vorgesehen;

g) Die Elektronik (29) ist so ausgebildet, daß in Abhängigkeit von elektrischen Signalen der Einstelleinrichtung und in Abhängigkeit von den elektrischen Signalen des Drucksensors (33) die Ventileinrichtung (28) ansteuerbar ist.

## Claims

1. Electrically controllable valve device, particularly pressure regulating valve, with the following characteristics:

   a) at least one electrically controllable valve device (28) is mounted in an inside space (36) of a housing (52);

   b) electrical means or electrically conducting means (29) are mounted in the inside space (36) of the said housing (52) for controlling the valve device (28);

   c) the housing (52) has connections for pressure medium ducts (16) mounted in the housing (52), by means of which the valve device can be connected on the one hand with a source of pressure medium, and on the other hand with a device (53) which can be impinged with pressure medium;

   characterized in that each of the pressure medium ducts (16) is designed on at least a part of its length as a slot (17) proof against the penetration of ignition in such a manner that it consists of a recess (16) in the form of a channel provided in the housing and an insert (15) mounted in this recess (16) extending in the direction of the longitudinal axis of the recess (16), designed to such dimensions that between the insert (15) and the wall defining the recess (16) there remains at least one slot (17) extending in the direction of the longitudinal axis of the recess (16) and surrounding the insert (15).

2. Electrically controllable valve device according to claim 1 with a pressure medium duct acting for the ventilation of the inner space (36) of the housing (52) desired as a channel-like recess (13), characterized in that this channel-like recess is also designed on at least part of its length as a slot (12, 13, 14) proof against the penetration of ignition.

3. Electrically controllable valve device according to either claim 1 or 2, characterized in that the insert (15) is designed as a cylindrical body.

4. Electrically controllable valve device according to claim 3, characterized in that the insert (15) has a star-shaped cross-section transversally to its longitudinal axis.

5. Electrically controllable valve device according to one or more of the foregoing claims for an electrically controllable pressure regulation valve, characterized by the following characteristics:

   a) a valve device (28), a pressure sensor (33) and an electronic system (29) are arranged in the inner space (36) of a housing (52);

   b) the housing (52) is connected with a relay valve (53) in such a manner that a control piston (4, 5, 6) of the relay valve (53) defines a control chamber (7) mounted in the housing (52) for the relay valve (53)

   c) the control chamber (7) is connected with the valve device (28) via a pressure medium duct designed as a slot (14, 15, 16) proof against penetration of ignition;

   d) the relay valve (53) has a work chamber (3) which is connected with the pressure medium connection of the pressure sensor (33) via a pressure medium duct designed as a slot (49, 48, 47) proof against penetration of ignition;

   e) the valve device (28) and an electric part of the pressure sensor (33) are connected with the electronic system (29);

   f) a setting device electrically connected with the electronic system (29) is provided;

   g) the electronic cystem (29) is so designed that the valve device (28) can be controlled depending upon electric signals of the setting device and depending upon the electric signals of the pressure sensor (33).

## Revendications

1. Dispositif de commande électrique de soupape, en particulier de soupape de régulation de pression, ayant les caractéristiques suivantes :

   a) un tel dispositif (28) est au moins placé dans la chambre interne (36) d'un boîtier (52),

   b) dans cette chambre interne (36) sont disposés des moyens électriques et des conducteurs (29) destinés à la commande du dispositif (28),

   c) le boîtier (52) comporte des raccords à l'image des conduites (16) de fluide sous pression contenues dans le boîtier, permettant de relier le dispositif d'une part à une source de fluide sous pression, d'autre part à un dispositif (53) qui peut être alimenté en fluide sous pression,

caractérisé en ce que chacune des conduites de fluide sous pression (16), sur au moins une partie de sa longueur, est constituée par une fente antidéflagrante (17) par le fait qu'un insert est disposé à l'intérieur d'un alésage en forme de canal (16) pratiqué dans le boîtier, selon l'axe longitudinal de l'alésage (16), les dimensions de l'insert étant choisies de manière à laisser subsister entre lui et la paroi de l'alésage au moins une fente (17) selon la direction axiale de l'alésage (16).

2. Dispositif de commande électrique de soupape, selon la revendication 1 comportant une conduite de fluide sous pression en forme d'alésage, canal (13) servant de liaison entre la chambre interne (36) du boîtier (52) et l'atmosphère, caractérisé en ce que cet alésage, canal (13) est constitué également sur au moins une partie de la longueur, comme une fente antidéflagrante (12, 13, 14).

3. Dispositif de commande électrique de soupape selon la revendication 1 ou 2, caractérisé en ce que l'insert (15) est un corps cylindrique.

4. Dispositif de commande électrique de soupape selon la revendication 3, caractérisé en ce que l'insert (15) a une section, perpendiculaire à son axe, en forme d'étoile.

5. Dispositif de commande électrique de soupape, selon une ou plusieurs des revendications précédentes, appliqué à une soupape de régulation de pression, caractérisé en ce que :
    a) dans la chambre interne (36) d'un boîtier (52) sont disposés un dispositif à soupape (28), un détecteur de pression (33) et un ensemble électronique (29).
    b) le boîtier (52) est relié à une soupape relais (53), de telle sorte qu'un piston de commande (4, 5, 6) de la soupape relais (53) délimite dans le boîtier (52) une chambre de commande (7) de la soupape relais (53).
    c) la chambre de commande (7) est reliée au dispositif de soupape (28) par une conduite de fluide sous pression constituée comme une fente antidéflagrante (15, 16, 17).
    d) la soupape relais (53) comporte une chambre de travail (3), reliée au raccord de fluide sous pression du détecteur de pression (33) par une conduite de fluide sous pression constituée comme une fente antidéflagrante (49, 48, 47).
    e) le dispositif à soupape (28) et une partie électrique du détecteur de pression (33) son reliés à l'ensemble électronique (29).
    f) il est prévu un dispositif de réglage relié électriquement à l'ensemble électronique (29).
    g) l'ensemble électronique (29) est constitué de manière à ce que la commande du dispositif à soupape (28) soit effectué en fonction des signaux électriques du dispositif de réglage et des signaux électrique du détecteur de pression (33).